(19) Europäisches Patentamt
European Patent Office
Office européen des brevets

(11) **EP 2 461 023 B1**

(12) **EUROPÄISCHE PATENTSCHRIFT**

(45) Veröffentlichungstag und Bekanntmachung des Hinweises auf die Patenterteilung:
**07.03.2018 Patentblatt 2018/10**

(51) Int Cl.:
**F03D 1/06** (2006.01)   **G01S 13/52** (2006.01)
**H01Q 15/16** (2006.01)   **F03D 80/00** (2016.01)
**F03D 80/10** (2016.01)

(21) Anmeldenummer: **11009519.7**

(22) Anmeldetag: **02.12.2011**

(54) **Rotorblatt für eine Windenergieanlage, sowie Kombination einer Radarstation und einer Windenergieanlage**

Rotor blade for a wind turbine and combination of a radar station and wind turbine

Pale de rotor pour éolienne et combinaison de station radar et d'éolienne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2010 DE 102010053369**

(43) Veröffentlichungstag der Anmeldung:
**06.06.2012 Patentblatt 2012/23**

(73) Patentinhaber: **Airbus Defence and Space GmbH 85521 Ottobrunn (DE)**

(72) Erfinder: **Bettermann, Joachim 27755 Delmenhorst (DE)**

(74) Vertreter: **Isarpatent Patent- und Rechtsanwälte Behnisch Barth Charles Hassa Peckmann & Partner mbB Postfach 44 01 51 80750 München (DE)**

(56) Entgegenhaltungen:
**WO-A1-2009/140949   WO-A2-2010/122352 US-A- 2 923 934**

- **Stephen G Appleton: "Design & Manufacture of Radar absorbing wind turbine blades - Final Report", Contract number: W/44/00636/00/REP, 28. Februar 2005 (2005-02-28), Seiten 1-50, XP055090826, Gefunden im Internet: URL:http://ukerc.rl.ac.uk/pdf/DTI_W4400636 0000_file16010.pdf [gefunden am 2013-11-29]**
- **PARK K Y ET AL: "Fabrication and electromagnetic characteristics of electromagnetic wave absorbing sandwich structures", COMPOSITES SCIENCE AND TECHNOLOGY, ELSEVIER, UK, Bd. 66, Nr. 3-4, 20. Juli 2005 (2005-07-20), Seiten 576-584, XP027988193, ISSN: 0266-3538 [gefunden am 2006-03-01]**

**Beschreibung**

Die vorliegende Erfindung betrifft ein Rotorblatt für eine Windenergieanlage, umfassend eine die Rotorblattoberfläche ausbildende Mantelstruktur aus flächigem Faserverbundmaterial. Ferner betrifft die Erfindung eine Kombination einer Radarstation und einer im Empfangsbereich der Radarstation angeordneten Windenergieanlage.

Windenergieanlagen umfassen eine drehbar gelagerte Rotorstruktur, die typischerweise von einer drehbar gelagerten Rotorwelle, einer Rotornabe an einem Ende der Rotorwelle und einem oder mehreren in Radialrichtung von der Rotornabe abstehenden Rotorblättern (Rotorflügeln) gebildet ist.

Bei einem sehr weit verbreiteten Anlagentyp ist die Rotorwelle um eine Horizontalachse drehbar in einem Maschinengehäuse ("Gondel") gelagert, welches wiederum um eine Vertikalachse drehbar an einem vertikal aufragenden Turm angeordnet ist.

Derartige Windenergieanlagen erzeugen bei Bestrahlung von elektromagnetischen Wellen durch Radarsysteme Radarreflexionen am Turm, am Maschinengehäuse und an der Rotorstruktur, insbesondere den Rotorblättern.

Wenngleich mittels der in vielen Radarsystemen vorgesehenen Festzielunterdrückung die zeitlich überwiegend konstanten Radarreflexionen am Turm und am Maschinengehäuse bei der Auswertung der rückreflektierten Radarstrahlung wirksam ausgeblendet werden können, so stellen die Rotorblätter aufgrund ihrer Drehung und der damit einhergehenden Dopplerverschiebung der an ihnen reflektierten Radarstrahlung ein hohes Störpotential für den Betrieb von Radarsystemen mit Bewegtzielerkennung dar.

Das Ausmaß der Rückreflexion von Radarstrahlung an der Rotorstruktur bzw. deren Rotorblättern sowie die Dopplerverschiebung der Radarreflexion hängen von der Einfallsrichtung der Radarstrahlung und der Drehstellung bzw. Drehgeschwindigkeit der Rotorstruktur ab. Bei einem Radarsystem mit Bewegtzielerkennung, welches derartige Dopplerverschiebungen auswertet, kann dies unerwünschterweise dazu führen, dass entsprechende Teile der Rotorstruktur, also z. B. Rotorblätter als "Flugobjekte" fehlinterpretiert werden. Wenn in dieser Weise Windenergieanlagen auf dem Radarschirm des Radarsystems als zusätzliches Ziel abgebildet werden, so kann dies die Erkennung der gewünschten Ziele teilweise erheblich erschweren. Solche Ziele können z. B. Flugzeuge bei einem Luftüberwachungsradar, Regenwolken bei einem Wetterradar oder auch Schiffe bei einem maritimen Navigationsradar sein.

Bei einem Betrieb von mehreren, räumlich zu einem "Windpark" zusammengefassten Windenergieanlagen treten die durch die einzelnen Windenergieanlagen verursachten Störziele in einem größeren, meist mehrere Quadratkilometer umfassenden Flächenbereich auf, in dem dann eine eindeutige Identifizierung und Verfolgung der gewünschten Ziele oftmals nicht mehr möglich ist. Aus dem Stand der Technik sind Rotorblätter bekannt, die sich durch radarabsorbierende oder radarreflektierende Strukturen auszeichnen (siehe z.B. WO 2009/140949; WO 2010/122352; US 2923934).

Es ist eine Aufgabe der vorliegenden Erfindung, durch den Betrieb einer Windkraftanlage bzw. eines Windparks hervorgerufene Störungen von Radarsystemen zu verringern. Diese Aufgabe wird durch das Rotorblatt nach Anspruch 1 gelöst. Die Vorderkante und die Hinterkante des Rotorblattes stellen diejenigen Oberflächenabschnitte dar, deren Radarreflexionen im Hinblick auf den Dopplereffekt das größte Störpotential für den Betrieb von Radarsystemen besitzen.

Somit gewährleistet die erfindungsgemäße Gestaltung des Faserverbundmaterials zumindest in diesen Bereichen der Mantelstruktur des Rotorblattes, nämlich mit einem Radarreflexionsfaktor (Dämpfungsfaktor) der im genannten Frequenzbereich für senkrecht zur Oberfläche einfallende Radarstrahlung ein Reflexionsminimum aufweist, eine beträchtliche Verringerung der Störungen.

Das erfindungsgemäße Rotorblatt kann eine grundsätzliche Struktur ähnlich wie bei nach dem Stand der Technik bekannten Rotorblättern besitzen, nämlich z. B. aus zwei Halbschalen zusammengesetzt, die jeweils aus einem Faserverbundwerkstoff-Vollmaterial (z. B. mehrschichtiges GFK-Laminat) hergestellt sind und an den Vorder- und Hinterkanten des Rotorblattes miteinander verklebt sind. Dementsprechend ist gemäß einer Ausführungsform der Erfindung vorgesehen, dass das Rotorblatt aus mehreren miteinander verbundenen, insbesondere miteinander verklebten Mantelschalen gebildet ist.

Beispielsweise können zwei Halbschalen vorgesehen sein, die an den Vorder- und Hinterkanten des Rotorblattes miteinander verbunden sind.

Bei der Erfindung wird jedoch bei der konkreten Materialauswahl und den geometrischen Verhältnissen (z. B. Materialdicke, bzw. Schichtdicken bei mehrschichtigem Material) dafür Sorge getragen, dass sich das genannte Reflexionsminimum ergibt.

Im Falle eines Faserverbund-Vollmaterials lässt sich eine hierfür geeignete Dimensionierungsregel z. B. mit folgender Formel ausdrücken:

$$d_V = \frac{\lambda_0}{2\sqrt{\varepsilon_r}}$$

Dabei bedeutet:

$d_V$ :    Dicke des Vollmaterials
$\lambda_0$ :    Freiraum-Wellenlänge des Radarsystems
$\varepsilon_V$ :    Spezifische Dielektrizitätskonstante (Realteil) des Vollmaterials

Mit der Dicke $d_v$ des Vollmaterials ergibt sich ein Reflexionsminimum für die Frequenz $f_0 = c/\lambda_0$ des Radarsystems (mit c = Lichtgeschwindigkeit) und für ganzzahlige Vielfache davon, wobei die ganzen Zahlen ungerade sind.

Im Falle einer Sandwich-Bauweise umfassend wenigstens eine Kemwerkstoff-Schicht und wenigstens zwei Deckschichten können ähnliche Dimensionierungsregeln zur Erzielung des gewünschten Reflexionsminimums berücksichtigt werden. Beispielsweise für den Fall eines symmetrischen Sandwich-Aufbaus, worunter eine Bauweise zu verstehen ist, die vorn und hinten Schichten gleicher Dicke und gleichen Materials besitzt, mit einem dazwischenliegenden Kemwerkstoff, lässt sich eine geeignete Dimensionierung z. B. wie folgt festlegen:

Sobald aus mechanischen Gründen die Materialien der Deckschichten und des Kernwerkstoffes sowie die Dicken der faserverstärkten Deckmaterialien definiert worden sind, ergibt sich die Dicke des Kernwerkstoffes näherungsweise aus folgender Formel:

$$d_K = \frac{\lambda_0}{\sqrt{\varepsilon_K}}\left(\frac{1}{4} - \frac{d_D\sqrt{\varepsilon_D}}{\lambda_0}\right)$$

Dabei bedeutet:

$d_K$ : Dicke des Kernwerkstoffes
$\lambda_0$ : Freiraum-Wellenlänge des Radarsystems
$\varepsilon_K$ : Spezifische Dielektrizitätskonstante (Realteil) des Kernwerkstoffes
$d_D$ : Dicke des Deckschichtmaterials
$\varepsilon_D$ : Spezifische Dielektrizitätskonstante (Realteil) des Deckschicht-Materials

Besonders bevorzugt werden hierbei folgende Einschränkungen beachtet:

a) $\varepsilon_K \leq 1,8$ d.h. die spezifische Dielektrizitätskonstante des Kernwerkstoffes sollte unter dem Wert 1,8 liegen. Dies trifft für die meisten Schäume, Waben etc. zu.

b) $d_D\sqrt{\varepsilon_D} < \frac{\lambda_0}{4}$ d.h. die elektrische Dicke des Deckschicht-Materials sollte kleiner als ein Viertel der Wellenlänge der vom Radarsystem ausgesendeten Strahlung sein.

Mit der vorgegebenen Dicke und der spezifischen Dielektrizitätskonstante des Deckschichtmaterials sowie der vorgegebenen spezifischen Dielektrizitätskonstante des Kernwerkstoffes ergibt sich also mit obiger Formel näherungsweise die Dicke des Kernwerkstoffes, bei der der Reflexionsfaktor für die Frequenz $f_0 = c/\lambda_0$ des Radarsystems (mit c = Lichtgeschwindigkeit) minimal wird.

Mit Hilfe einer Computersimulation kann, ausgehend von diesem Startwert, auch noch eine "Feinjustierung" der Kernschichtdicke erfolgen, so dass das Reflexionsminimum genau auf die Frequenz des Radarsystems abgestimmt wird.

Ähnlich wie an sich bereits aus dem Stand der Technik bekannt, kann auch bei dem erfindungsgemäßen Rotorblatt dessen Stabilität durch mindestens einen im Innenraum der Mantelstruktur angeordneten, die Mantelstruktur stabilisierenden Steg verbessert werden. Ein oder mehrere solche Stege können z. B. aus flächigem Faserverbundmaterial gebildet sein, welches bevorzugt ebenfalls zur Schaffung eines frequenzabhängigen Radarreflexionsfaktors für senkrecht zur Oberfläche einfallende Radarstrahlung mit einem Reflexionsminimum bei einer bestimmten Frequenz im Bereich von 1 GHz bis 10 GHz ausgebildet ist.

Die Frequenz der Radarstrahlung kann identisch oder zumindest im Wesentlichen identisch (z. B. um weniger als 10 % abweichend von) derjenigen Frequenz sein, für welche das Faserverbundmaterial an den Vorder- und Hinterkanten des Rotorblattes (und gegebenenfalls des oder der Stege) das genannte Reflexionsminimum besitzt.

In einer Ausführungsform ist vorgesehen, dass das zur Bereitstellung des Reflexionsminimums vorgesehene Faserverbundmaterial als ein Faserverbundwerkstoff-Vollmaterial ausgebildet ist. Alternativ kann dieses Faserverbundmaterial in Sandwich-Bauweise umfassend mehrere (gleich- oder verschiedenartige) Faserverbundwerkstoff-Schichten ausgebildet sein. Insbesondere kann z. B. ein symmetrischer Sandwich-Aufbau verwendet werden.

Ein Faserverbundwerkstoff-Vollmaterial kann z. B. als Laminat umfassend mehrere identische Fasermaterialschichten (z. B. Gewebe, Geflechte, Gelege etc.) ausgebildet sein. Eine einfache Sandwich-Bauweise sieht eine Kemschicht z. B. aus Schaumkunststoff, insbesondere Hartschaum, oder Holz, insbesondere Leichtholz, oder eine Waben- oder Wellenstruktur (z. B. aus einem harzgetränkten Papier oder z. B. einem GFK-Material (z. B. enthaltend ein Glasfasergewebe)), und beiderseits davon angeordnete Deckschichten aus gleichartigen oder verschiedenartigen Faserverbundwerkstoff-Schichten (z. B. GFK etc.) vor.

Das zur Bereitstellung des genannten Reflexionsminimums an den Vorder- und Hinterkanten des Rotorblattes verwendete Faserverbundmaterial besitzt besonders bevorzugt eine geringe elektrische Leitfähigkeit, sei es insgesamt (über die gesamte Dicke der Mantelstruktur) oder zumindest in einem oberflächennahen und somit die Oberfläche an Vorder- und Hinterkante ausbildenden Bereich. Eine derartige Bauweise verringert die Reflexion von einfallender Radarenergie. Im Idealfall wird der überwiegende Teil der Radarenergie durch die Mantelstruktur des Rotorblattes hindurchgeleitet. Auf diese Weise wird das Rotorblatt quasi mehr oder weniger durchsichtig für einen Großteil der einfallenden Radarenergie, so dass insgesamt nur noch relativ geringe Energieanteile von dem Rotorblatt zum Radarsystem zurückreflektiert werden, was die Störungen des Radarbetriebes weiter reduziert.

In dieser Hinsicht sind zur Ausbildung der Mantelstruktur zumindest an den Vorder- und Hinterkanten des Rotorblattes und/oder zur Ausbildung des oder der gegebenenfalls vorgesehenen stabilisierenden Stege bevorzugte Faserverbundmaterialien solche, die elektrisch schlecht leiten (z. B. Materialien mit einem elektrischen Verlustfaktor "tan$\delta$" von weniger als 0,01) bzw. als elektrische Nichtleiter (z. B. Materialien mit einem elektrischen Verlustfaktor "tan$\delta$ von weniger als 0,001) anzusehen sind.

Zur Ausbildung von elektrisch nicht leitfähigen Faserverbundwerkstoffen kann ein Fasermaterial bestehend aus elektrisch nicht leitfähigen Fasern wie z. B. Glasfasern, Aramidfasern, Polyethylenfasern etc. verwendet werden, dies in Verbindung mit einer elektrisch nicht leitenden Matrix wie z. B. Epoxidharz, Polyesterharz etc.

Bei einer Sandwich-Bauweise, also mit drei oder mehr Materialschichten, können einzelne Schichten auch z. B. aus den erwähnten Hartschäumen etc. gebildet sein.

Für die Erzielung des genannten Reflexionsminimums ist es zum einen günstig, wenn die "erste Schicht" des flächigen Faserverbundmaterials, welche also unmittelbar von der einfallenden Radarstrahlung getroffen wird, aus einem elektrisch schlecht oder nichtleitenden Faserverbundmaterial gebildet ist. Insofern ist hier CFK aufgrund dessen relativ hoher elektrischer Leitfähigkeit eher ungünstig, und stattdessen z. B. GFK zu bevorzugen. Zum anderen ist im Rahmen der Erfindung jedoch auch die "Geometrie" des zur Ausbildung der Vorder- und Hinterkanten des Rotorblattes (bzw. des oder der Stege) verwendeten flächigen Faserverbundmaterials von großer Bedeutung.

Sowohl wenn dieses Faserverbundmaterial als ein Faserverbundwerkstoff-Vollmaterial ausgebildet ist, als auch wenn dieses Faserverbundmaterial in Sandwich-Bauweise umfassend mehrere Faserverbundwerkstoffschichten ausgebildet ist, so ergeben sich stets mehrere Grenzflächen zwischen in Radarstrahlungsrichtung betrachtet unmittelbar benachbarten Materialschichten bzw. zwischen einer solchen Materialschicht und Luft (auf der Außenseite oder der Innenseite der Mantelstruktur des Rotorblattes). Durch eine geeignete Wahl der in Radarstrahlungsrichtung betrachteten gegenseitigen Abstände dieser Grenzflächen, in Verbindung mit den Dielektrizitätskonstanten der beiderseits dieser Grenzflächen jeweils befindlichen Werkstoffe (bzw. Luft), lässt sich das erfindungsgemäß vorgesehene Reflexionsminimum in einfacher Weise dadurch realisieren, dass die von den verschiedenen Grenzflächen rückreflektierten Radarstrahlungsanteile im Wesentlichen destruktiv interferieren.

Hierfür geeignete Werkstoffkombinationen bzw. Werkstoffanordnungen können z. B. unter Berücksichtigung der oben bereits erläuterten "Dimensionierungsvorschriften" festgelegt werden. Die oben formelmäßig angegebenen Werte für die Dicke eines Vollmaterials ($d_V$) bzw. die Dicke des Kernwerkstoffes ($d_K$) bei einem symmetrischen Sandwich-Aufbau werden bevorzugt zumindest näherungsweise vorgesehen, z. B. mit einer Abweichung zwischen tatsächlicher Dicke und anhand der betreffenden Formel vorgegebenen Dicke von weniger als 10 %, insbesondere weniger als 5 %, der sich im betreffenden Material (Faserverbund-Vollmaterial bzw. Kernwerkstoff) ergebenden Wellenlänge der Radarstrahlung.

Auch kommt in Betracht, entsprechende Computersimulationen durchzuführen. Generell bevorzugt sind elektrisch schlechter leitende Faserverbundmaterialien wie GFK, insbesondere zur Ausbildung der ersten Werkstoffschicht (im Falle einer Ausbildung aus mehreren verschiedenen Schichten). Erfindungsgemäß ist es vorgesehen, dass das zur Bereitstellung des Reflexionsminimums vorgesehene Faserverbundmaterial (an der "ersten", unmittelbar von der Radarstrahlung getroffenen Oberfläche) einen elektrischen spezifischen Oberflächenwiderstand von mehr als $10^3$ Ohm/Quadrat aufweist.

In einer Ausführungsform ist vorgesehen, dass das Reflexionsminimum einen Wert von weniger als -20 dB, insbesondere weniger als -25 dB besitzt. Insbesondere bei Ausnutzung des Effekts einer destruktiven Interferenz von Radarstrahlungsanteilen, die von den in Radarstrahlungsrichtung nacheinander von der einfallenden Radarstrahlung getroffenen Grenzflächen zurückreflektiert werden, lassen sich vorteilhaft relativ schmalbandige Reflexionsminima vorsehen. Dies beispielsweise mit einer Halbwertsbreite von weniger als 0,5 GHz, insbesondere weniger als 0,25 GHz.

Es versteht sich, dass die Lage des erfindungsgemäß vorgesehenen Reflexionsminimums möglichst genau an die im Einsatz des Rotorblattes zu erwartende Frequenz der Radarstrahlung anzupassen ist. Falls die Frequenz des Reflexionsminimums nennenswert von dieser Radarfrequenz abweicht, so liegt die Radarfrequenz dennoch bevorzugt innerhalb der Halbwertsbreite des Reflexionsminimums. In einer Ausführungsform ist vorgesehen, dass der frequenzabhängige Reflexionsfaktor im Frequenzbereich von 1 GHz bis 10 GHz genau ein Minimum besitzt. Alternativ kann in diesem Frequenzbereich jedoch auch mehr als ein Minimum des Reflexionsfaktors vorgesehen sein, insbesondere z. B. genau zwei Minima. In letzterem Fall kann die Lage der beiden Minima z. B. an zwei verschiedene Radarfrequenzen von zwei verschiedenen Radarsystemen (z. B. ein Luftüberwachungsradar und ein Wetterradar) angepasst werden.

Gemäß eines weiteren Aspekts der Erfindung wird eine Kombination (wenigstens) einer Radarstation und einer im Empfangsbereich der Radarstation angeordneten Windenergieanlage bereitgestellt, wobei Rotorblätter der Windenergieanlage jeweils als ein Rotorblatt nach einem der Ansprüche 1-3 ausgebildet sind, wobei die Frequenz des Reflexionsminimums der Radarfrequenz der Radarstation entspricht.

Eine etwaige Abweichung zwischen der Frequenz des Reflexionsminimums und der Radarfrequenz ist bevorzugt kleiner als 0,5 GHz. Der Reflexionsfaktor bei der Radarfrequenz beträgt bevorzugt weniger als -15 dB, weiter bevorzugt weniger als -20 dB.

In einer Weiterbildung umfasst die Kombination zwei Radarstationen mit voneinander verschiedenen Radarfrequenzen, z. B. ein Flugsicherungsradar und ein maritimes Navigationsradar, wobei der mit dem Faserverbundmaterial geschaffene frequenzabhängige Radarreflexionsfaktor zwei Reflexionsminima der erläuterten Art besitzt, deren Frequenzen den Radarfrequenzen der Radarstationen entsprechen. Dies gegebenenfalls wieder mit allenfalls eher kleinen Abweichungen, wie bereits für den Fall einer Radarstation und eines Reflexionsminimums beschrieben.

Bei jeder Radarstation kann es sich insbesondere um eine Radarstation mit Bewegtzielerkennung durch Auswertung einer Dopplerverschiebung des zurückreflektierten Radarsignals handeln.

Falls die Kombination mehrere Radarstationen mit voneinander verschiedenen Radarfrequenzen umfasst, so ist gemäß einer Ausführungsform vorgesehen, dass unter den Radarfrequenzen mindestens ein Frequenzpaar existiert, bei welchem die eine Radarfrequenz ein ganzzahliges Vielfaches der anderen Radarfrequenz ist. Ein Beispiel hierfür ist ein Flugsicherungsradar mit einer Radarfrequenz von 3 GHz in Kombination mit einem maritimen Navigationsradar mit einer Radarfrequenz von 9 GHz.

Die Erfindung wird nachfolgend anhand von Ausführungsbeispielen mit Bezug auf die beigefügten Zeichnungen weiter beschrieben. Es stellen dar:

Fig. 1     eine Schnittansicht eines Rotorblattes für eine Windenergieanlage,

Fig. 2     eine Schnittansicht längs der Linie II-II in Fig. 1,

Fig. 3     eine Schnittansicht längs der Linie III-III in Fig. 1,

Fig. 4     eine Schnittansicht längs der Linie IV-IV in Fig. 1,

Fig. 5     den frequenzabhängigen Verlauf des Radarreflexionsfaktors für das in Fig. 2 dargestellte Material,

**Fig. 6**     den frequenzabhängigen Verlauf des Radarreflexionsfaktors für das in Fig. 3 dargestellte Material,

**Fig. 7**     den frequenzabhängigen Verlauf des Radarreflexionsfaktors für das in Fig. 4 dargestellte Material,

**Fig. 8**     eine Schnittansicht eines Materials gemäß eines weiteren Ausführungsbeispiels, und

**Fig. 9**     den zugehörigen frequenzabhängigen Verlauf des Radarreflexionsfaktors.

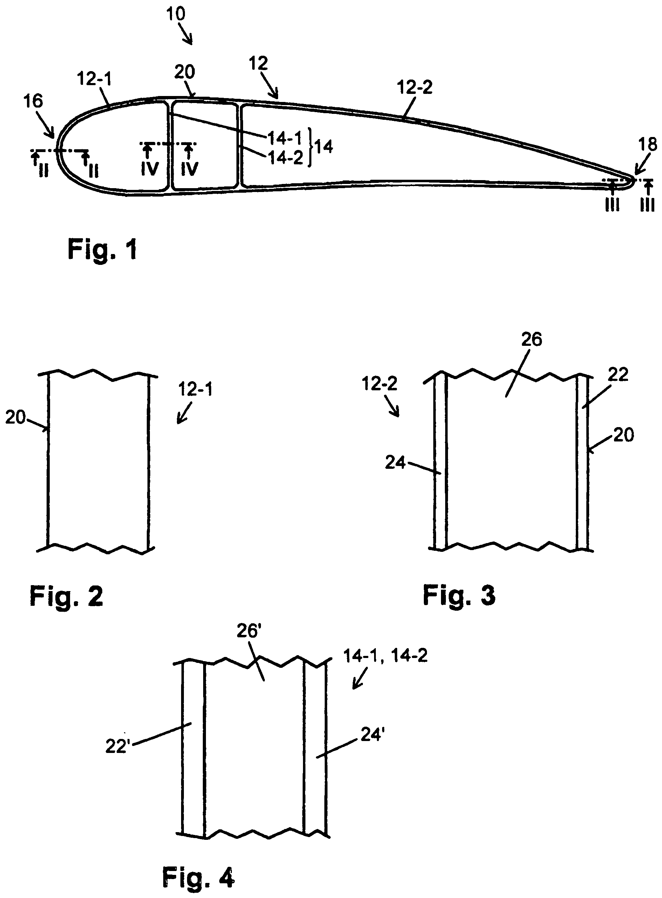

Fig. 1 veranschaulicht in einer Schnittansicht den Aufbau eines Rotorblattes 10 für eine Windenergieanlage, umfassend eine Mantelstruktur 12 und eine die Mantelstruktur 12 stabilisierende Innenstruktur 14, welche im dargestellten Ausführungsbeispiel von zwei quer zur Erstreckungsrichtung des Rotorblattprofils verlaufenden Stegen 14-1 und 14-2 gebildet ist.

Das Rotorblatt 10 besitzt eine Vorderkante 16 und eine Hinterkante 18.

Die Außenseite der Mantelstruktur 12 definiert die Oberfläche 20 des Rotorblattes 10 und die Mantelstruktur 12 ist aus flächigem Faserverbundmaterial gebildet, wobei im dargestellten Ausführungsbeispiel zwei verschiedene Bereiche bzw. verschiedene Faserverbundmaterialien 12-1 und 12-2 verwendet sind. Das Material ist 12-1 ist zur Ausbildung der Vorderkante 16 und der daran angrenzenden Mantelstrukturbereiche bis etwa zur Mitte des dargestellten Rotorblattes 10 (jenseits der Stege 14-1, 14-2) verwendet. Das Material 12-2 ist zur Ausbildung der dahinter liegenden Bereiche des Rotorblattes 10 bis hin zur Hinterkante 18 vorgesehen.

Auch die Stege 14-1, 14-2 sind jeweils aus (identischem) Faserverbundmaterial gebildet, welches sich jedoch von den flächigen Faserverbundmaterialien 12-1 und 12-2 unterscheidet.

Eine Besonderheit des Rotorblattes 10 besteht darin, dass zumindest an der Vorderkante 16 und der Hinterkante 18, beim dargestellten Beispiel auch im Bereich der Stege 14-1, 14-2, das jeweilige Faserverbundmaterial 12-1 und 12-2 (und im dargestellten Beispiel auch die Faserverbundmaterialien 14-1, 14-2) zur Schaffung eines frequenzabhängigen Radarreflexionsfaktors R für senkrecht zur Oberfläche einfallende elektromagnetische Radarstrahlung mit einem Reflexionsminimum bei einer bestimmten Frequenz im Bereich von 1 GHz bis 10 GHz ausgebildet ist.

Die Fig. 2, 3 und 4 zeigen die jeweiligen Bauweisen der flächigen Faserverbundmaterialien 12-1, 12-2 bzw. 14-1, 14-2.

Das Faserverbundmaterial 12-1 (Fig. 2) besitzt eine monolithische GFK-Bauweise, d. h. besteht aus einer Schicht von GFK-Material, mit einer Dicke von 12,9 mm. Die Dielektrizitätskonstante des GFK-Materials 12-1 beträgt etwa 4,3.

Das Faserverbundmaterial 12-2 (Fig. 3) ist eine Sandwich-Konstruktion aus einer äußeren GFK-Deckschicht 22 (Dicke 1 mm, Dielektrizitätskonstante 4,3), einer inneren GFK-Deckschicht 24 (Dicke 1 mm, Dielektrizitätskonstante 4,3), sowie einem Hartschaumkem 26 (Dicke 11,3 mm, Dielektrizitätskonstante 1,1).

Das Faserverbundmaterial 14-1, 14-2 (Fig. 4) ist ebenfalls eine Sandwich-Konstruktion aus einer äußeren GFK-Deckschicht 22' (Dicke 2 mm, Dielektrizitätskonstante 4,3), einer inneren GFK-Deckschicht 24' (Dicke 2 mm, Dielektrizitätskonstante 4,3), sowie einem Hartschaumkern 26' (Dicke 8,5 mm, Dielektrizitätskonstante 1,1).

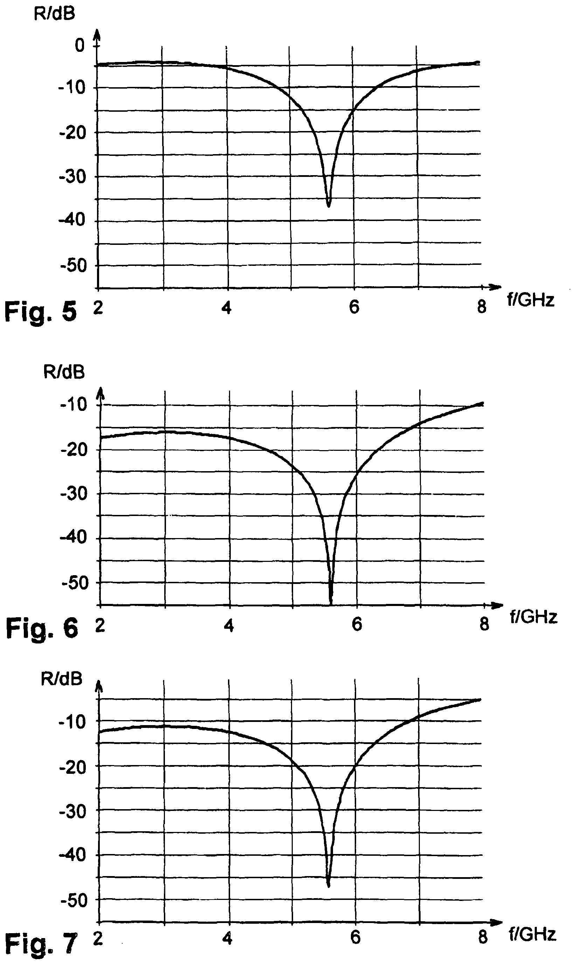

In den Fig. 5, 6 und 7 sind die berechneten frequenzabhängigen Reflexionsfaktorverläufe der in den Fig. 2, 3 und 4 dargestellten Faserverbundmaterialien bei senkrechtem Strahlungseinfall dargestellt.

Fig. 5 zeigt den Reflexionsfaktor R für das Faserverbundmaterial 12-1.

Fig. 6 zeigt den Reflexionsfaktor R für das Faserverbundmaterial 12-2.

Fig. 7 zeigt den Reflexionsfaktor R für das Faserverbundmaterial 14-1, 14-2.

Es ist ersichtlich, dass die Reflexionsfaktoren der drei Bauweisen bei einer Frequenz von 5,6 GHz, die z. B. typisch für ein Wetterradar ist, -34 dB, -55 dB bzw. - 47 dB betragen. Es werden somit lediglich etwa 0,02 %, 0,0003 % bzw. 0,002 % der einfallenden Radarenergie an den jeweiligen Bauweisen reflektiert.

Dies bedeutet umgekehrt, dass etwa 99,98 %, 99,9997 % bzw. 99,998 % der einfallenden Radarenergie durch die jeweiligen Bauweisen hindurch transmittiert werden. Das Rotorblatt 10 ist somit in dem relevanten Frequenzbereich weitgehend transparent für die einfallende Radarenergie, so dass insgesamt die Radarreflexionen am Rotorblatt 10 erheblich vermindert sind.

Im dargestellten Ausführungsbeispiel betragen die Halbwertsbreiten der bei 5,6 GHz liegenden Reflexionsminima jeweils weniger als 0,5 GHz.

Bei der nachfolgenden Beschreibung eines weiteren Ausführungsbeispiels werden für gleichwirkende Komponenten die gleichen Bezugszahlen verwendet, jeweils ergänzt durch einen kleinen Buchstaben "a" zur Unterscheidung der Ausführungsform. Dabei wird im Wesentlichen nur auf die Unterschiede zu dem bereits beschriebenen Ausführungsbeispiel eingegangen und im Übrigen hiermit ausdrücklich auf die Beschreibung des vorangegangenen Ausführungsbeispiels verwiesen.

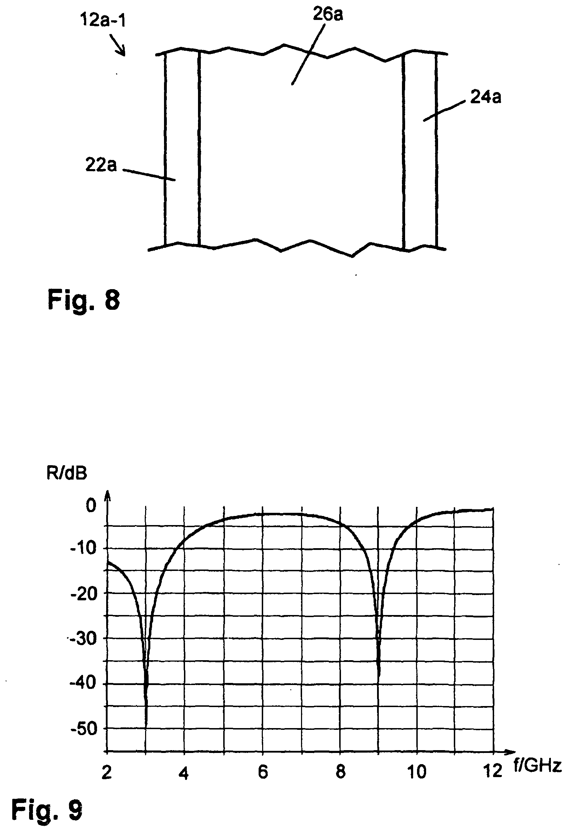

Fig. 8 veranschaulicht ein weiteres Beispiel einer zur Reduzierung von Radarreflexionen geeigneten Bauweise und zeigt eine Schnittansicht eines flächigen Faserverbundmaterials 12a-1.

Das Faserverbundmaterial 12a-1 kann z. B. bei einem Rotorblatt der Fig. 1 dargestellten Art als Ersatz für ein oder mehrere der dort verwendeten Faserverbundmaterialien 12-1, 12-2 und 14-1, 14-2 eingesetzt werden. In einer Ausführungsform wird das in Fig. 8 dargestellte Faserverbundmaterial 12a-1 für die gesamte Mantelstruktur (und die gegebenenfalls vorgesehene Innenstruktur) eines solchen Rotorblattes der in Fig. 1 dargestellten Art eingesetzt.

Das Faserverbundmaterial 12a-1 ist eine Sandwich-Konstruktion aus einer äußeren GFK-Deckschicht 22a (Dicke 3 mm, Dielektrizitätskonstante 4,3), einer inneren GFK-Deckschicht 24a (Dicke 3 mm, Dielektrizitätskonstante 4,3), und einem Wabenkern 26' aus harzgetränktem Papier (Dicke 17,5 mm, Dielektrizitätskonstante 1,07).

Eine Besonderheit des Faserverbundmaterials 12a-1 besteht darin, dass dessen frequenzabhängiger Radarreflexionsfaktor R für senkrecht zur Oberfläche einfallende Radarstrahlung zwei Reflexionsminima bei bestimmten Frequenzen im Bereich von 1 GHz bis 10 GHz besitzt.

Wie es aus Fig. 9 ersichtlich ist, liegen diese Reflexionsminima bei den Frequenzen von 3 GHz (z. B. Frequenz eines militärischen Flugsicherungsradars) und bei 9 GHz (z. B. Frequenz eines maritimen Navigationsradars). Bei diesen Frequenzen wird eine erhebliche Reduzierung der Radarreflexionen erreicht, nämlich auf 0,001 % (bei 3 GHz) bzw. 0,02 % (bei 9 GHz).

Mit der Erfindung bzw. den beschriebenen Ausführungsbeispielen lässt sich ein Rotorblatt für eine Windkraftanlage realisieren, bei welchem die Radarreflexionen erheblich reduziert sind. Insbesondere bei Einsatz des Rotorblattes für eine Mehrzahl von Windenergieanlagen, die in einem Winkpark räumlich zusammengefasst sind, der sich im Erfassungsbereich eines oder mehrerer Radarsysteme befindet, kann somit ein Radarbetrieb mit erheblich weniger Störungen sichergestellt werden. Erfindungsgemäß wird zumindest an der Vorderkante und der Hinterkante des Rotorblattes das wie beschrieben reflexionsminimierte Faserverbundmaterial verwendet. Es können jedoch noch weitere Strukturabschnitte des Rotorblattes, insbesondere die gesamte Mantelstruktur und eine gegebenenfalls vorgesehene, stabilisierende Innenstruktur in einer der beschriebenen Bauweisen vorgesehen sein. In Abhängigkeit von dem bzw. den im Einsatz des Rotorblattes zu erwartenden Radarfrequenzen können die besondere Anordnung und die Kombination der Materialien und deren Dimensionierung, Schichtdicke(n) und elektromagnetischen Stoffkonstanten angepasst werden.

Abweichend von den beschriebenen Ausführungsbeispielen könnte z. B. vorgesehen sein, dass mechanisch besonders stark belastete Bereiche des Rotorblattes aus einem Faserverbundmaterial enthaltend CFK anstelle des beschriebenen GFK, oder aus Metall (insbesondere z. B. Stahl) bestehen.

Weiterhin kann es aus Gründen des Blitzschutzes erforderlich sein, dass metallische Leiter vorgesehen werden müssen, um z. B. von der Rotorblattspitze bzw. der Rotorblattoberfläche Blitzströme in Richtung zur Erde (z. B. über ein Maschinengehäuse und einen Turm) abzuleiten.

Wenngleich bei den beschriebenen Faserverbundmaterialien die Verwendung von Epoxidharz als Matrix oftmals bevorzugt ist, so kommen auch andere Matrixmaterialien wie z. B. Thermoplaste in Frage.

## Patentansprüche

1. Rotorblatt (10) für eine Windenergieanlage, umfassend eine die Rotorblattoberfläche (20) ausbildende Mantelstruktur aus flächigem Faserverbundmaterial (12-1, 12-2), wobei zumindest an der Vorderkante

(16) und der Hinterkante (18) des Rotorblattes (10) das Faserverbundmaterial (12-1, 12-2) zur Schaffung eines frequenzabhängigen Radarreflexionsfaktors (R) für senkrecht zur Oberfläche einfallende Radarstrahlung mit einem Reflexionsminimum bei einer bestimmten Frequenz im Bereich von 1 GHz bis 10 GHz ausgebildet ist;

wobei das zur Bereitstellung des Reflexionsminimums vorgesehene Faserverbundmaterial (12-1, 12-2) als ein Faserverbundwerkstoff-Vollmaterial (12-1) ausgebildet ist und die Dicke ($d_V$) des Faserverbundwerkstoff-Vollmaterials (12-1) zumindest näherungsweise einen Wert von

$$d_V = \frac{\lambda_0}{2\sqrt{\varepsilon_V}}$$

besitzt mit einer etwaigen Abweichung zwischen einer tatsächlichen Dicke des Faserverbundwerkstoff-Vollmaterials (12-1) und der anhand der vorstehenden Formel vorgegebenen Dicke ($d_V$) von weniger als 10 % der sich in dem Faserverbundwerkstoff-Vollmaterial (12-1) ergebenden Wellenlänge der Radarstrahlung, wobei

$d_V$ die Dicke des Vollmaterials (12-1),
$\lambda_0$ die Freiraum-Wellenlänge der Radarstrahlung, und
$\varepsilon_V$ die spezifische Dielektrizitätskonstante (Realteil) des Vollmaterials

bezeichnen;

oder das zur Bereitstellung des Reflexionsminimums vorgesehene Faserverbundmaterial (12-1, 12-2) in symmetrischer Sandwich-Bauweise (12-2) mit zwei Faserverbundwerkstoff-Schichten (22, 24) als Deckschichten und einer Kernwerkstoff-Schicht (26) ausgebildet ist und die Dicke ($d_K$) der Kernwerkstoff-Schicht (26) zumindest näherungsweise einen Wert von

$$d_K = \frac{\lambda_0}{\sqrt{\varepsilon_K}}\left(\frac{1}{4} - \frac{d_D\sqrt{\varepsilon_D}}{\lambda_0}\right)$$

besitzt mit einer etwaigen Abweichung zwischen einer tatsächlichen Dicke der Kernwerkstoff-Schicht (26) und der anhand der vorstehenden Formel vorgegebenen Dicke ($d_K$) von weniger als 10 % der sich in der Kernwerkstoff-Schicht (26) ergebenden Wellenlänge der Radarstrahlung, wobei

$d_K$ die Dicke der Kernwerkstoff-Schicht (26),
$\lambda_0$ die Freiraum-Wellenlänge der Radarsstrahlung,
$\varepsilon_K$ die spezifische Dielektrizitätskonstante (Realteil) des Kernwerkstoffes,
$d_D$ die Dicke der Deckschichten (22, 24), und
$\varepsilon_D$ die spezifische Dielektrizitätskonstante (Realteil) des DeckschichtMaterials

bezeichnen; und
wobei das zur Bereitstellung des Reflexionsminimums vorgesehene Faserverbundmaterial (12-1; 22, 24, 26) einen elektrischen spezifischen Oberflächenwiderstand von mehr als $10^3$ Ohm/Quadrat aufweist.

2. Rotorblatt nach einem der vorangehenden Ansprüche, wobei das Reflexionsminimum einen Wert von weniger als -20 dB, insbesondere weniger als - 25 dB besitzt.

3. Rotorblatt nach einem der vorangehenden Ansprüche, wobei der frequenzabhängige Reflexionsfaktor (R) im Frequenzbereich von 1 GHz bis 10 GHz genau ein Minimum oder genau zwei Minima besitzt.

4. Kombination einer Radarstation und einer im Empfangsbereich der Radarstation angeordneten Windenergieanlage, **dadurch gekennzeichnet, dass** Rotorblätter der Windenergieanlage jeweils als ein Rotorblatt (10) nach einem der Ansprüche 1 bis 3 ausgebildet sind, wobei die Frequenz des Reflexionsminimums der Radarfrequenz der Radarstation entspricht.

**Claims**

1. Rotor blade (10) for a wind power plant, comprising a shell structure of a flat composite fibre material (12-1, 12-2) forming the rotor blade surface (20), the composite fibre material (12-1, 12-2) being provided at least at the leading edge (16) and trailing edge (18) of the rotor blade (10) to create a frequency-dependent radar reflectivity factor (R) for radar radiation incidental perpendicular to the surface with a minimum reflectance at a particular frequency within the range of 1 GHz to 10 GHz;
wherein the composite fibre material (12-1, 12-2) envisaged to provide the minimum reflectance is formed as a solid composite fibre material (12-1) and the thickness (dv) of the solid composite fibre material (12-1) has at

$$d_V = \frac{\lambda_0}{2\sqrt{\varepsilon_V}}$$

with any discrepancy between an actual thickness of the solid composite fibre material (12-1) and the thickness (dv) specified by the above formula being less than 10% of the wavelength of the radar radiation resulting in the solid composite fibre material (12-1), where the following symbols are used:

$d_V$ the thickness of the solid material (12-1),
$\lambda_0$ the wavelength in vacuum of the radar radiation, and
$\varepsilon_V$ the specific dielectric constant (real part) of the solid material;

or the composite fibre material (12-1, 12-2) envisaged to provide the minimum reflectance is formed in a symmetrical sandwich construction (12-2) with two

$$d_K = \frac{\lambda_0}{\sqrt{\varepsilon_K}} \left( \frac{1}{4} - \frac{d_D \sqrt{\varepsilon_D}}{\lambda_0} \right)$$

composite fibre material layers (22, 24) as outer layers and a core material layer (26), and the thickness (dK) of the core material layer (26) having at least approximately a value of
with any discrepancy between an actual thickness of the core material layer (26) and the thickness (dK) specified by the above formula being less than 10% of the wavelength of the radar radiation resulting in the core material layer (26), where the following symbols are used:

$d_K$ the thickness of the core material layer (26),
$\lambda_0$ the wavelength in vacuum of the radar radiation,
$\varepsilon_K$ the specific dielectric constant (real part) of the core material,
$d_D$ the thickness of the outer layers (22, 24), and
$\varepsilon_D$ the specific dielectric constant (real part) of the outer layer material;

and
wherein the composite fibre material (12-1; 22, 24, 26) envisaged to provide the minimum reflectance has a specific electrical surface resistance of more than 103 ohm/square.

2. Rotor blade according to any one of the preceding claims, wherein the minimum reflectance is a value lower than -20 dB, in particular lower than -25 dB.

3. Rotor blade according to any one of the preceding claims, wherein the frequency-dependent reflectivity factor (R) in the frequency range of 1 GHz to 10 GHz has precisely a minimum or precisely two minimums.

4. Combination of a radar station and a wind power plant arranged in the receiving region of the radar station, **characterised in that** rotor blades of the wind power plant are each formed as a rotor blade (10) according to any one of claims 1 to 3, wherein the frequency of the minimum reflectance corresponds to the radar frequency of the radar station.

**Revendications**

1. Pale de rotor (10) pour éolienne, comprenant une structure d'enveloppe en matériau composite fibreux plat (12-1, 12-2) formant la surface de pale de rotor (20), le matériau composite fibreux (12-1, 12-2) étant conçu au moins sur le bord d'attaque (16) et le bord de fuite (18) de la pale de rotor (10) pour créer un facteur de réflexion radar (R) dépendant de la fréquence pour un rayonnement radar d'incidence perpendiculaire à la surface avec un minimum de réflexion à une fréquence comprise entre 1 GHz et 10 GHz ;
le matériau composite fibreux (12-1, 12-2) prévu pour l'obtention du minimum de réflexion étant réalisé sous la forme d'un matériau plein en matière composite fibreuse (12-1) et l'épaisseur (dV) du matériau plein en matière composite fibreuse (12-1) possédant au moins approximativement une valeur de

$$d_V = \frac{\lambda_0}{2\sqrt{\varepsilon_V}}$$

avec un écart éventuel entre une épaisseur réelle du matériau plein en matière composite fibreuse (12-1) et l'épaisseur (dV) prédéfinie à l'aide de la formule ci-dessus inférieur à 10 % de la longueur d'onde du rayonnement radar obtenue dans le matériau plein en matière composite fibreuse (12-1), où

$d_V$ désigne l'épaisseur du matériau plein (12-1),
$\lambda_0$ désigne la longueur d'onde en espace libre du rayonnement radar, et
$\varepsilon_V$ désigne la constante diélectrique spécifique (partie réelle) du matériau plein ;

ou le matériau composite fibreux (12-1, 12-2) prévu pour l'obtention du minimum de réflexion étant réalisé en une construction en sandwich (12-2) symétrique avec deux couches de matière composite fibreuse (22, 24) comme couches extérieures et une couche de matériau d'âme (26) et l'épaisseur (dK) de la couche de matériau d'âme (26) possédant au moins approximativement une valeur de

$$d_K = \frac{\lambda_0}{\sqrt{\varepsilon_K}}\left(\frac{1}{4} - \frac{d_D\sqrt{\varepsilon_D}}{\lambda_0}\right)$$

avec un écart éventuel entre une épaisseur réelle de la couche de matériau d'âme (26) et l'épaisseur (dK) prédéfinie à l'aide de la formule ci-dessus inférieur à 10 % de la longueur d'onde du rayonnement radar obtenue dans la couche de matériau d'âme (26), où

$d_K$ désigne l'épaisseur de la couche de matériau d'âme (26),
$\lambda_0$ désigne la longueur d'onde en espace libre du rayonnement radar,
$\varepsilon_K$ désigne la constante diélectrique spécifique (partie réelle) du matériau d'âme,
$d_D$ désigne l'épaisseur des couches extérieures (22, 24), et
$\varepsilon_D$ désigne la constante diélectrique spécifique (partie réelle) du matériau de couche extérieure ;

et
le matériau composite fibreux (12-1 ; 22, 24, 26) prévu pour l'obtention du minimum de réflexion présentant une résistance électrique superficielle spécifique de plus de $10^3$ ohms/carré.

2. Pale de rotor selon l'une des revendications précédentes, dans laquelle le minimum de réflexion possède une valeur inférieure à -20 dB, en particulier inférieure à -25 dB.

3. Pale de rotor selon l'une des revendications précédentes, dans laquelle le facteur de réflexion (R) dépendant de la fréquence dans la plage de fréquence de 1 GHz à 10 GHz possède exactement un minimum ou exactement deux minimums.

4. Combinaison d'une station radar et d'une éolienne disposée dans la zone de réception de la station radar, **caractérisée en ce que** des pales de rotor de l'éolienne sont réalisées respectivement sous la forme d'une pale de rotor (10) selon l'une des revendications 1 à 3, la fréquence du minimum de réflexion correspondant à la fréquence radar de la station radar.

**Fig. 1**

**Fig. 2**

**Fig. 3**

**Fig. 4**

**Fig. 5**

**Fig. 6**

**Fig. 7**

**Fig. 8**

**Fig. 9**

**IN DER BESCHREIBUNG AUFGEFÜHRTE DOKUMENTE**

**In der Beschreibung aufgeführte Patentdokumente**

- WO 2009140949 A
- WO 2010122352 A
- US 2923934 A